# EUROPEAN PATENT APPLICATION

(11) **EP 2 371 503 A2**
(43) Date of publication of application: **05.10.2011**
(21) Application number: 11159816.5
(22) Date of filing: 25.03.2011
(51) Int. Cl.: B27G 21/00, F16P 3/08

(54) **Power Tool**

(30) Priority: 01.04.2010 GB 1005539
(71) Applicant: Black & Decker Inc., Newark, Delaware 19711 (US)
(72) Inventor: Bettacchini, Marcello, 06074, PERUGIA (IT); Ginocchini, Lucio, 06132, Perugia (IT)
(74) Representative: Bell, Ian Stephen

(57) **Abstract**

A power tool comprising: a body (26; 262) a motor (100; 300) mounted within the body; a cutting tool (24; 290) driven by the motor; a cover (2; 260) releaseably lockable to the body; a first connector mounted on the body and a second connector mounted on the cover, wherein one of the first or second connectors comprises a threaded rod (18; 218) and the other connector comprises a threaded passage (34; 234) and wherein the threaded rod is screwed into the threaded passage to lock the cover to the body; control electronics (102; 302 which controls the motor (100; 300); a micro switch (36; 236), electrically connected to the control electronics (102; 302), located adjacent the end of the passage (34; 234) and which is engaged by the end of the threaded rod (18; 218) when the threaded rod (18; 218) is screwed into the threaded passage (34; 231), wherein the micro switch (36; 236) provides a signal to control electronics (102; 302) to indicate whether it is engaged with the end of the threaded rod (18; 218) or not, the control electronics (102; 302) allowing the motor (100; 300 ) to operate as normal when the micro switch (36; 236) indicates that the threaded rod (18; 218) is engaged with the micro switch (36; 236) and hindering the normal operation of the motor (100; 300) when the micro switch (36 236) indicates that the threaded rod (18; 218) is not engaged with the micro switch (36; 236). The thread of rod and passage is of a non standard pitch and/or is in a reverse direction.

## Description

The present invention relates to a power tool having a cover.

Power tools come in a wide variety of designs and includes without limitation planer and thicknessers, planers, biscuit jointers, band saws, mitres saws, chop saws sliding saws, compound mitre saws, scroll saws, jig saws, reciprocating saws, circular saws, hammers, drills, sanders of all types, angle grinders and routers. Power tools comprise a motor, usually electric, which drives a cutting tool, such as a saw blade or drill bit or grinding disk or sand paper, in a reciprocating and/or rotational manner. Such tool often include covers or guards which form part of the housing or cover part or all of the cutting tool to prevent access by the operator to a moving part of the power tool, such as the motor, drive gears, cutting tool, whilst it is operating.

One such power tool is a planer and thicknesser. EP1570964 describes such a planer thicknesser, and in particular, EP1570964 describes a dust extractor for a planer thicknesser. When the dust extractor disclosed in EP1570964 is used in a first mode of operation, it is connected to the underside of the rear section 16 of the upper table. When the dust extractor is used in a second mode of operation, it is connected to the topside of the front section 14 of the upper table. The dust extractor covers a part of the cutting drum when used as in the first or second modes of operation, acting as a guard to prevent the operator from touching the rotating cutting drum.

Europe has introduced new safety legislation in relation to planer thicknessers. It is now a requirement that the dust extractor must be fitted at all times when it is in use. Therefore, a locking system needs to be added which detects whether the dust extractor has been fitted and which prevents the operation of the planer thicknesser if it has not been fitted

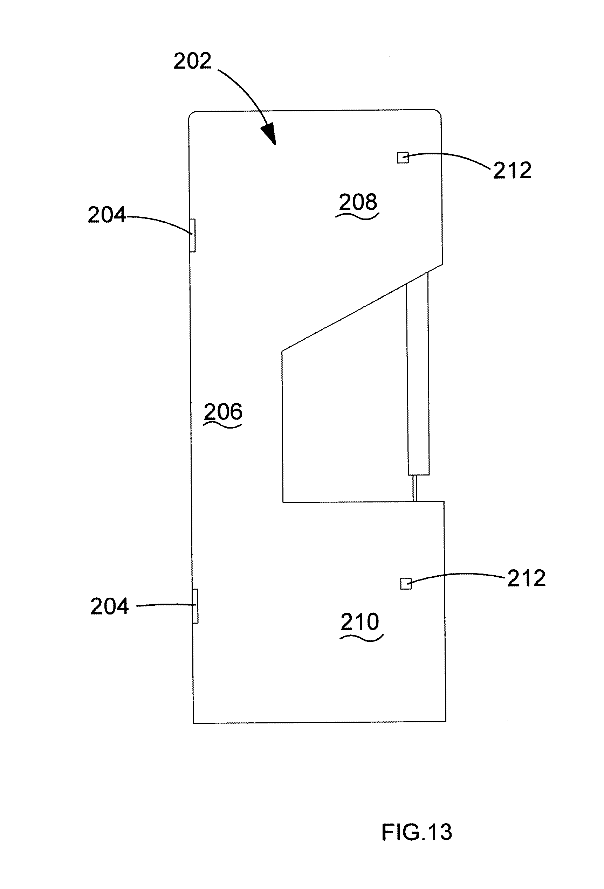

Another type of power tool is a band saw. In the existing design of band saw, shown in Figure 13, the door 202 is C shaped with a central section 206 and two arm sections 208, 210 and is connected to the main housing at two hinge points 204 located on the central section 206. The door is locked to the main housing using two locks 212, one mounted on one arm section, the other mounted on the other arm section 210. The door acts as a guard to prevent the operator touching the blade as it rotates inside of the main housing.

Europe has introduced new safety legislation in relation to band saws. It is now a requirement that the blade must be enclosed at all times when it is in use. Therefore, it has been proposed to add a sensor which detects whether the door of the band saw is open or closed.

GB662066 discloses a safety locking device for guard on a machine. Accordingly, there is provided a power tool comprising:
a body;
a motor mounted within the body;
a cutting tool driven by the motor;
a cover releaseably lockable to the body;
a first connector mounted on the body and a second connector mounted on the cover, wherein one of the first or second connectors comprises a threaded rod and the other connector comprises a threaded passage and wherein the threaded rod is screwed into the threaded passage to lock the cover to the body;
control electronics which controls the motor;
a micro switch, electrically connected to the control electronics, located adjacent the end of the passage and which is engaged by the end of the threaded rod when the threaded rod is screwed into the threaded passage,
wherein the micro switch provides a signal to control electronics to indicate whether it is engaged with the end of the threaded rod or not, the control electronics allowing the motor to operate as normal when the micro switch indicates that the threaded rod is engaged with the micro switch and hindering the normal operation of the motor when the micro switch indicates that the threaded rod is not engaged with the micro switch;
characterised in that both the threaded passage and rod have a permanent non moveable helical thread of a fixed pitch wherein the thread of the rod and passage is of a non standard pitch and/or the thread of the rod and the passage is in a reverse direction to that of a standard pitch.

Two embodiments of the present invention will now be described with reference to the accompanying drawings of which:
Figure 1 shows a perspective view of the dust extractor located the front section of the upper table;
Figure 2 shows the underside of the dust extractor;
Figure 3 shows a side view of the dust extractor located the front section of the upper table;
Figure 4 shows a second perspective view of the dust extractor located the front section of the upper table;
Figure 5 shows a top view of the connection point with a sensor;
Figure 6 shows a side view of the connection point with a sensor;
Figure 7 shows a plastic guard;
Figure 8 shows the plastic guard attached to the edge of the front section of the upper table;
Figure 9 shows a schematic view of the vertical cross section of planer thicknesser with the dust extractor located above and below then rear section of the upper table; and
Figure 10 shows a schematic diagram of a cross sectional view of the connection point with a sensor;
Figure 11 shows a diagram of the control system for the motor;
Figure 12 show a perspective view of a schematic diagram of a planer thicknesser;
Figure 13 shows a front view of an existing design of band saw;
Figures 14A to 14D shows a band saw according to the second embodiment of the present invention;
Figure 15 shows a schematic diagram of a cross sectional view of the lock of the band saw with a sensor; and
Figure 16 shows the electric circuit of the band saw.

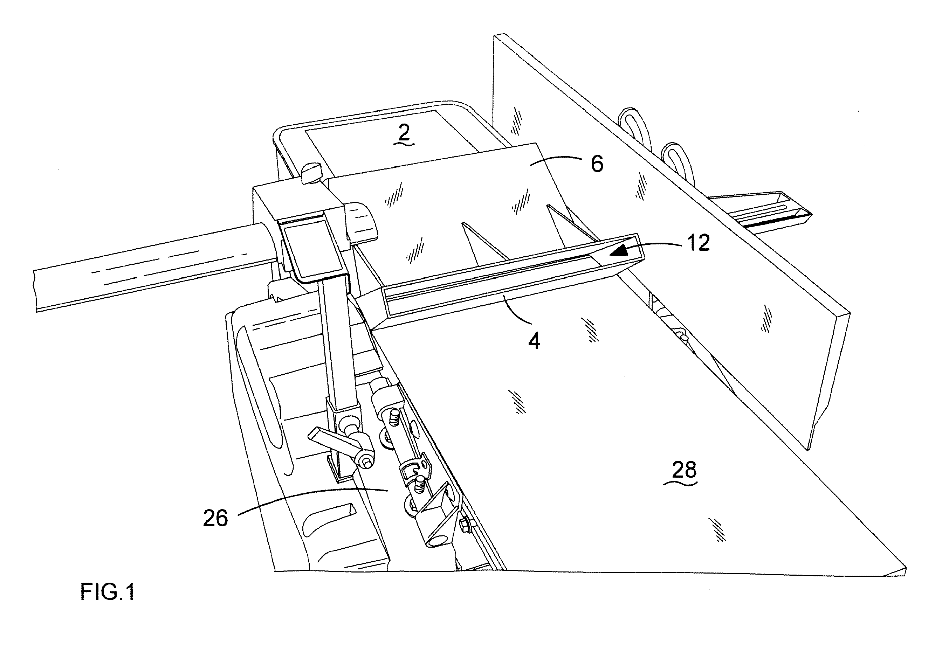

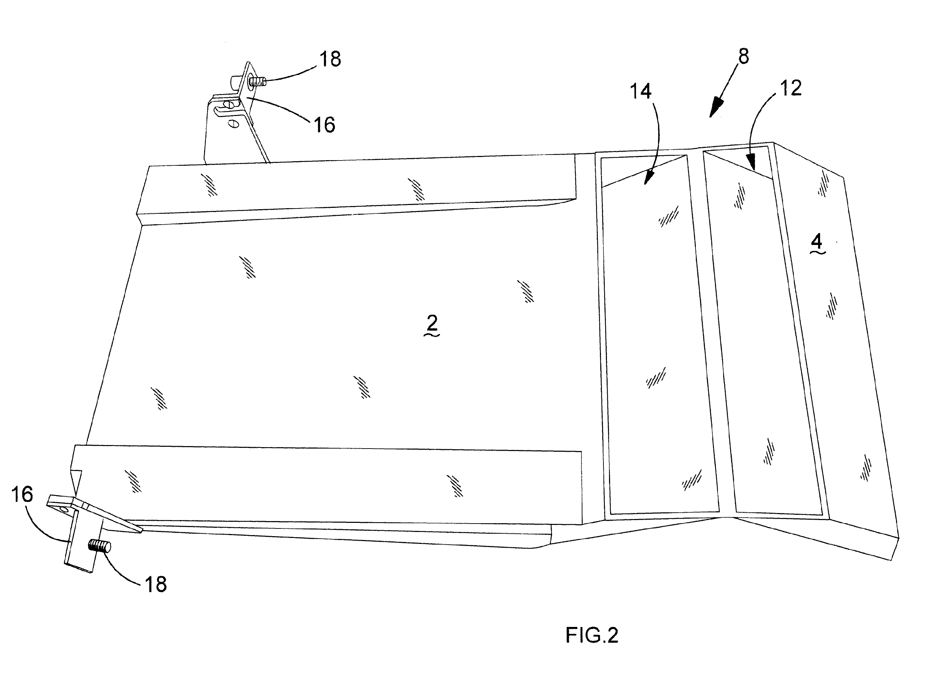

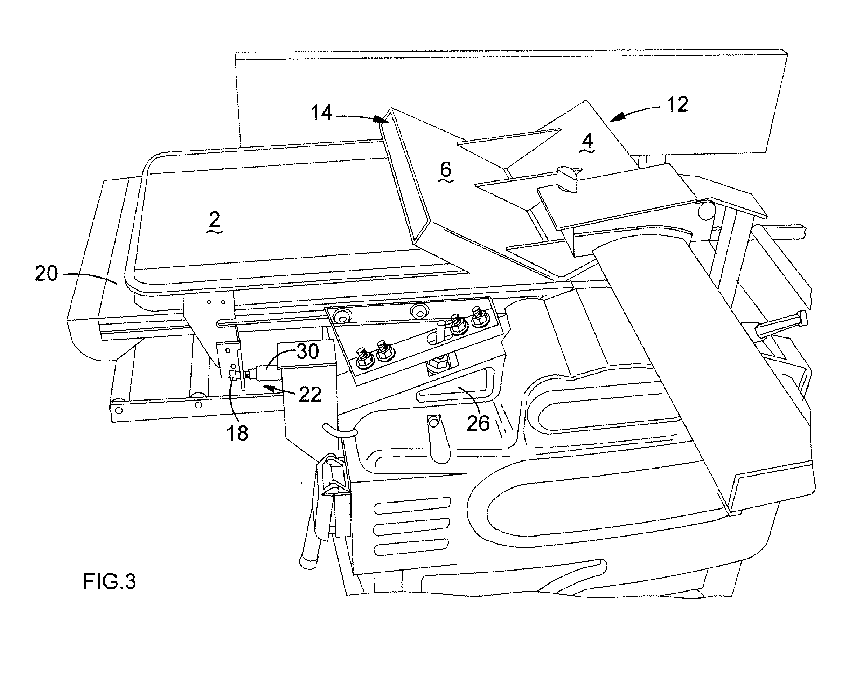

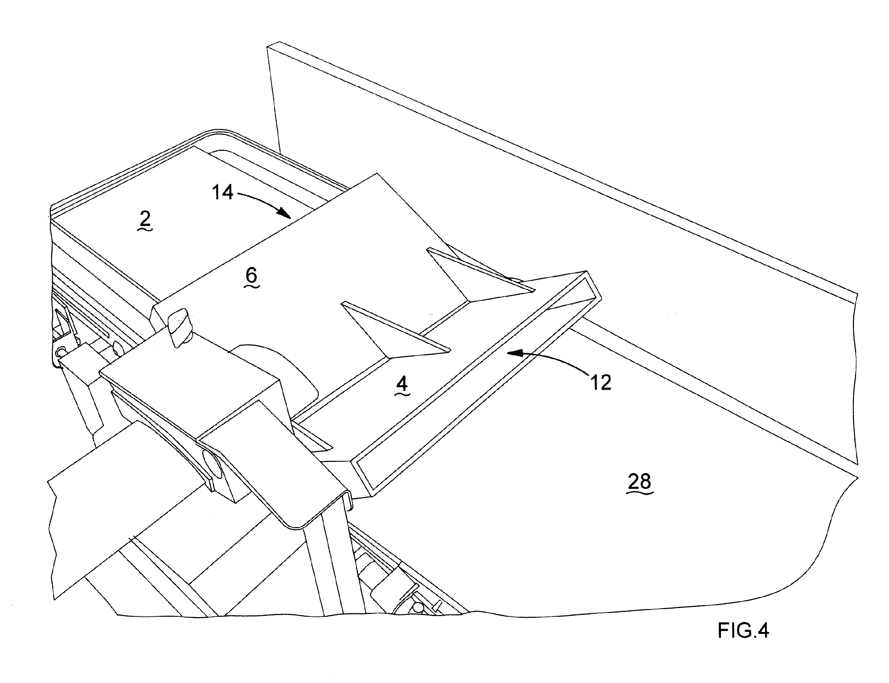

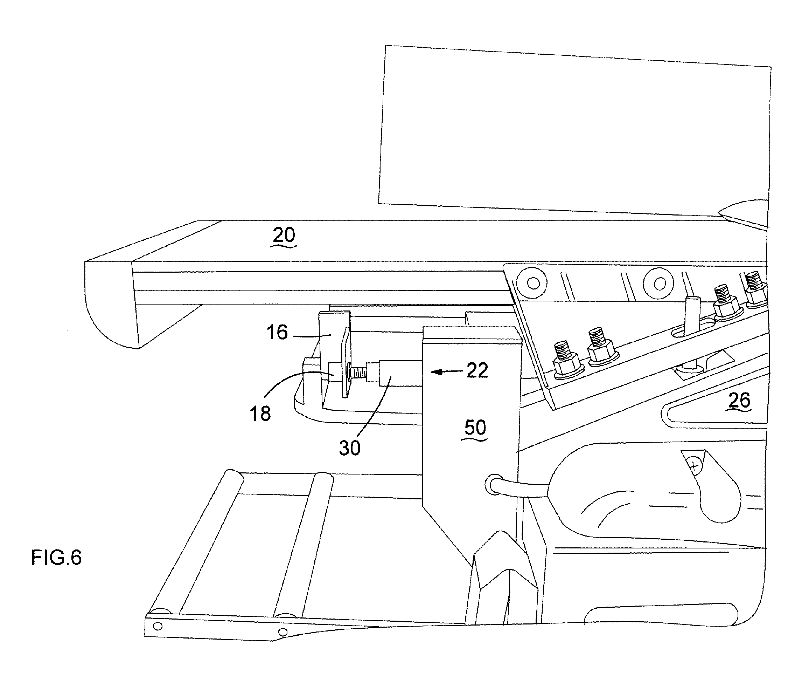

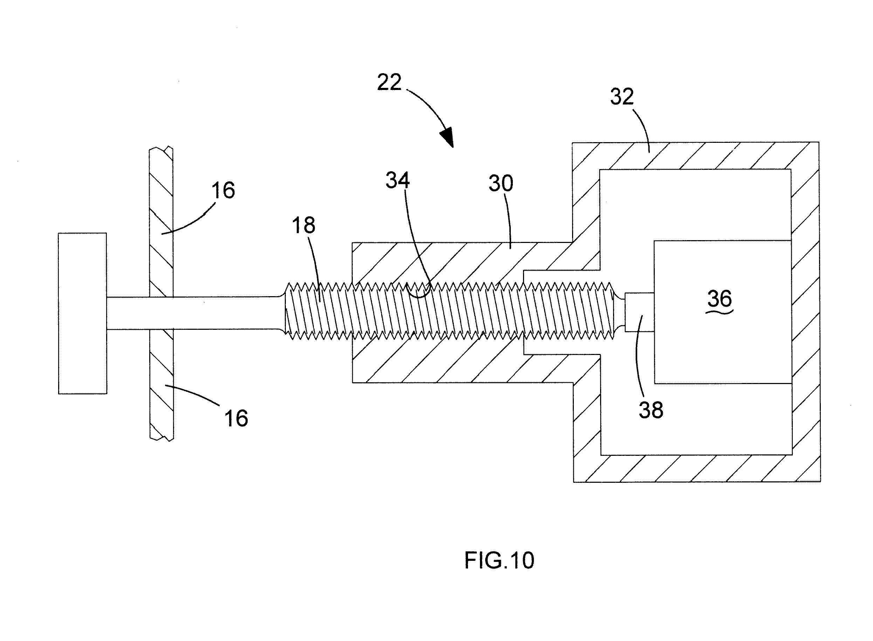

A first embodiment of the present invention will now be described with reference to Figures 1 to 12. The first embodiment is described in relation to a planer and thicknesser.

The planer thicknesser described in the embodiment is similar to that described in EP1570964 except for the design of dust extractor, the mechanism by which it is attached to the frame of the planer thicknesser, the electric circuit for the motor, and the addition of a locking system which detects whether the dust extractor has been fitted and which prevents the operation of the planer thicknesser if it has not been fitted.

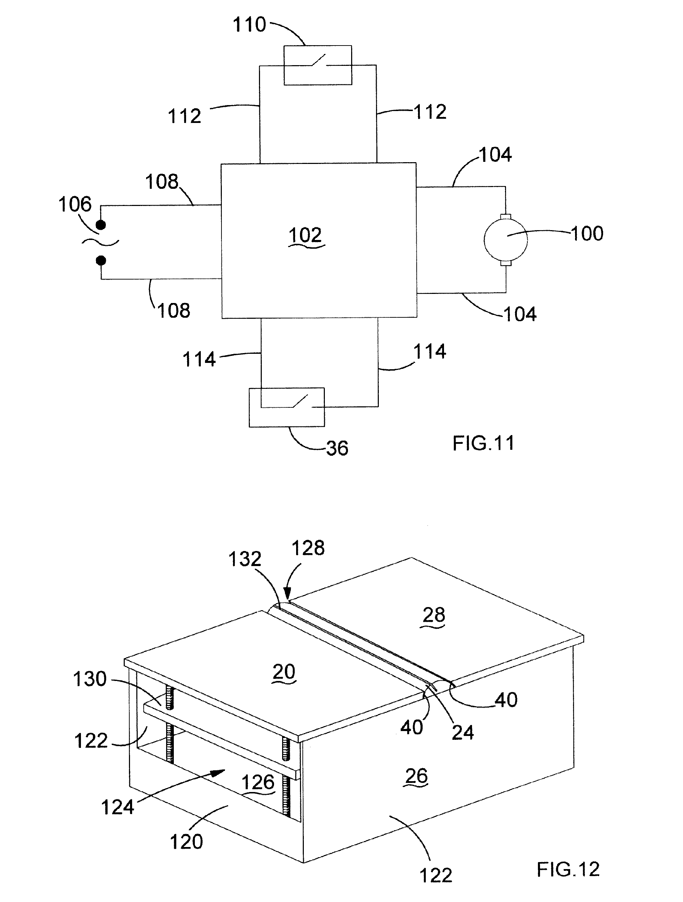

Referring to Figure 12, the planer and thicknesser comprises a box like frame 26 comprising a horizontal rectangular upper table 20, 28 and a base 120 connected to each other along their longer sides by two side walls 122. The horizontal upper table is located directly above the rectangular base 120. A first aperture 124 is formed by one of the shorter ends of the upper table 20, 28 and by the base 120 and one end of each of the two side walls 122. Similarly, a second aperture (not visible) is formed on the opposite side of the rectangular box frame 126 by the other shorter end of the upper table 20, 28 and the other end of the base 120, together with the other ends of each of the side walls 122. A passage way 126 connects the two apertures 124 to each other.

The upper table is constructed from two rectangular sections, a front section 28 and a rear section 20. The two sections 20, 28 of the upper table are constructed from single rectangular sheets of metal having smooth top surfaces. The top surface of the front section 28 is parallel to the top surface of the rear section 20. Both the top surfaces are smooth so I that a work piece can be slid across their surfaces. The height of the front section 28 can be adjusted relative to the height of the rear section 20. The two sections are separated by a slot 128.

A horizontal lower table 130 is located movably within the passage way 126. The plane of the lower table 130 is parallel to that of the upper table 20, 28. The lower table 130 is constructed as a single rectangular sheet of metal having a smooth top surface. The lower table 130 extends through the full length of the passage way 126 from the first aperture 124 to the second aperture. The width of the table 130 is slightly less than that the width of the passage way 126. The table 130 is mounted in such a manner that it can be moved vertically upwards or downwards, the top surface of the table 130 remaining horizontal at all times during this process.

A cutting drum 24 is rotatably mounted between the two side walls 122 in such a manner that its axis of rotation is perpendicular to the plane of the side walls 122 and parallel to the planes of the upper and lower tables. The cutting drum 24 can be rotatably driven by an electric motor 100 mounted within the base 120. The axis of rotation of the cutting drum 24 is located below the upper table 20, 28.

A part of the periphery of the cutting drum 24 along its length extends upwardly through the slot 128 between the front 28 and rear 20 sections of the upper table.

Each of two cutting blades 132 are mounted within a groove of the cutting drum 24 which runs along the length of the cutting drum 24 in well known manner parallel to the axis of rotation. The cutting blades 132 of the cutting drum 24 can be used to cut work pieces in well known manner which are either slid across the upper table 20, 28 in one direction or are slid across the lower table 130 in the other direction.

The cutting drum 24 is located so that, as the cutting drum 24 rotates, the maximum height of the cutting blades 132 mounted within the cutting drum 24 through the slot 128 is approximately the same as that of the height of the rear section 20 of the upper table, the height of the rear section 20 being fixed relative to the frame 26.

The electric circuit for the motor will now be described.

Referring to Figure 11, the planer thicknesser comprises control electronics 102 which is connected to a motor 100. The motor 100 rotatingly drives a cutting drum 24 in order to allow the planer thcicknesser to operate in its first or second modes of operation. The control electronics 102 control the operation of the motor 100 which is powered by the control electronics via electric cables 104. The control electronics 102 controls the voltage and current signal to the motor to control its speed and torque out put. The control electronics 102 is connected to a mains power supply 106 via electric cables 108. An ON/OFF switch 110 is electrically connected to the control electronics 102 via electric cables 112. The ON/OFF switch 110 is mounted on the frame 26 of the planer thicknesser. Activation of the ON/OFF switch 110 by tan operator sends a signal to the control electronics 102 to cause it to drive the motor 100. A micro switch 36 (described in more detail below) 110 is electrically connected to the control electronics 102 via electric cables 114. The micro switch 36, when activated, sends a signal to the control electronics 102. The control electronic is configured so that it will only operate the motor 100 in a normal driving mode if the micro switch 36 is activated. If the micro switch 36 is not activated, the control electronics can be configured to either 1 ) prevent the operation of the motor 100, 2) provide sufficient voltage and/or current to the motor 100 to cause it to hum or buzz (providing an indication to the operator that the micro switch has not been activated) or 3) drive motor 100 at a very slow rate (providing an indication to the operator that the micro switch has not been activated).

A detailed description of the new design of dust extractor will now be described.

Referring to Figures 1 to 4, the dust extractor comprises a tubular body 2 of rectangular cross section and which provides a first passageway 10. Two chutes 4, 6 are attached at one end of the body 2 and on one side of the body 2, adjacent each other. Both chutes are tubular with a rectangular cross section having the same dimensions as the body 2. Each chute 4, 6 provides another passageway 12, 14. The first chute 4 extends forward at angle of 45 degrees to the body 2. The second extends rearward at angle of 45 degrees to the body, the two chutes extending at 90 degrees relative to each other. A large aperture 8 is formed on the opposite side of the body 2 to where the chutes 4, 6 are attached and where the passageways 10, 12, 14 inside of the two chutes 4, 6 and body 2 meet. Two parallel connection arms 16 are attached to either side of the body 2. The connection arms 16 connect to two connection points 22 on the frame 26 of the planer and thicknesser, each using a bolt 18. The bolts are attached to the arms 16 in such a manner that they can be rotated to attach them to the connection points 22 but can not be removed from the arms 16. As such, the bolts 18 remain permanently attached to the arms 16. The connection points are described in more detail below.

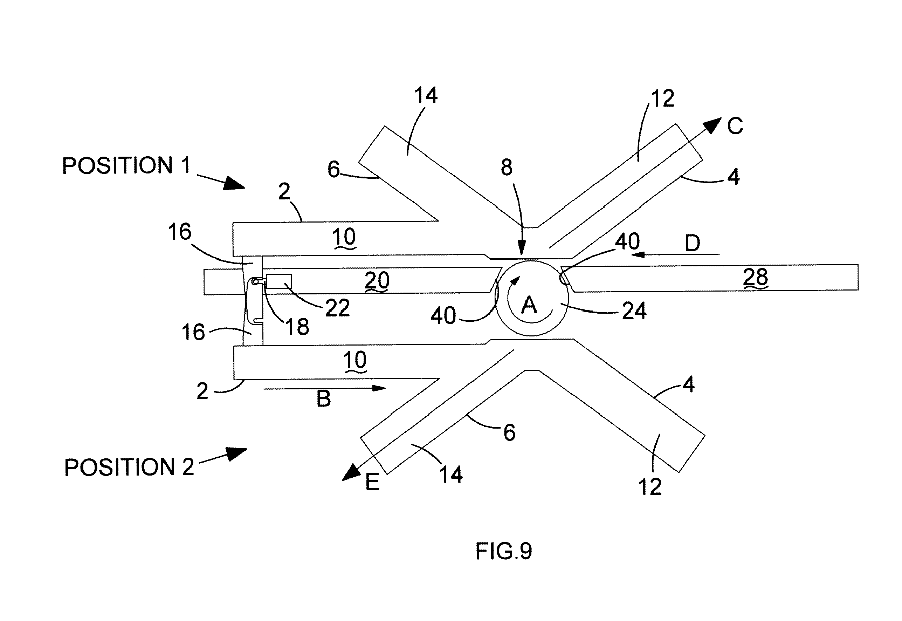

The operation of the dust extractor will now be described with reference to Figure 9.

When the planer thicknesser is used as a thicknesser, (second mode of operation) the dust extractor is placed on top of the rear section 20 of the upper table, shown as position 1. Each of the arms 16 is attached using the bolts 18 to the connection points 22 on the frame 26 located on either side of the rear section 20 of the upper table. A cutting drum 24 is located between the rear section 20 of the upper table and the front section 28 of the upper table and rotates in the direction of Arrow A. A work piece is fed into the body 26 of the planer thicknesser underneath the rear section 20 of the upper table in the direction of Arrow B until it engages the drum 24. The rotating cutting drum 24 cuts the top surface of the work piece and the wood chips created are expelled from the planer thicknesser through the dust extractor. The wood chips pass through the aperture 8 and then through the passageway 12 in the first chute 4 and then is expelled from the first chute in a direction indicated by Arrow C. The first chute 4 is arranged to extend away from the tubular body 2 in a direction perpendicular to the axis of rotation of the cutting drum and in the same direction that the wood chips are expelled from the cutting drum 24 as it cuts the work piece. This provides a straight passage for the wood chips to pass through, the straight passage comprising the aperture 8, the chamber inside of the tubular body 2 and the passageway in the chute 4.

When the planer thicknesser is used as a planer (first mode of operation), the dust extractor is placed underneath the rear section 20 of the upper table, shown as position 2. Each of the arms 16 is attached using the bolts 18 to the same connection points 22 located on either side of the rear section 20 of the upper table. The cutting drum 24 rotates in the same direction, the direction of Arrow A. A work piece is fed onto the front section 28 of the upper table in the direction of Arrow D until it engages the drum 24. The rotating cutting drum 24 cuts the bottom surface of the work piece and the wood chips created are expelled from the planer thicknesser through the dust extractor. The wood chips pass through the aperture 8 and then through the passageway 14 in the second chute 6 and then are expelled from the second chute 6 in a direction indicated by Arrow E. The second chute 6 is arranged to extend away from the tubular body 2 in a direction perpendicular to the axis of rotation of the cutting drum 24 and in the same direction that the wood chips are expelled from the cutting drum 24 as it cuts the work piece. This provides a straight passage for the wood chips to pass through, the straight passage comprising the aperture 8, the chamber inside of the tubular body 2 and the passageway in the chute 6.

The use of two chutes 4, 6 enables the dust extractor to connected at one end of the planer thicknesser, either above or below the rear section 20 of the upper table, thus allowing only one set of connection points to be required.

The connection points used for attaching the dust extractor either above the rear section of the upper table28 or below the rear section 20 of the upper table will now be described.

The first connection point (not shown) comprises a simple threaded tubular passage formed in the frame 26 into which one of the bolts 18 screws to secure the arm 16 to that connection point.

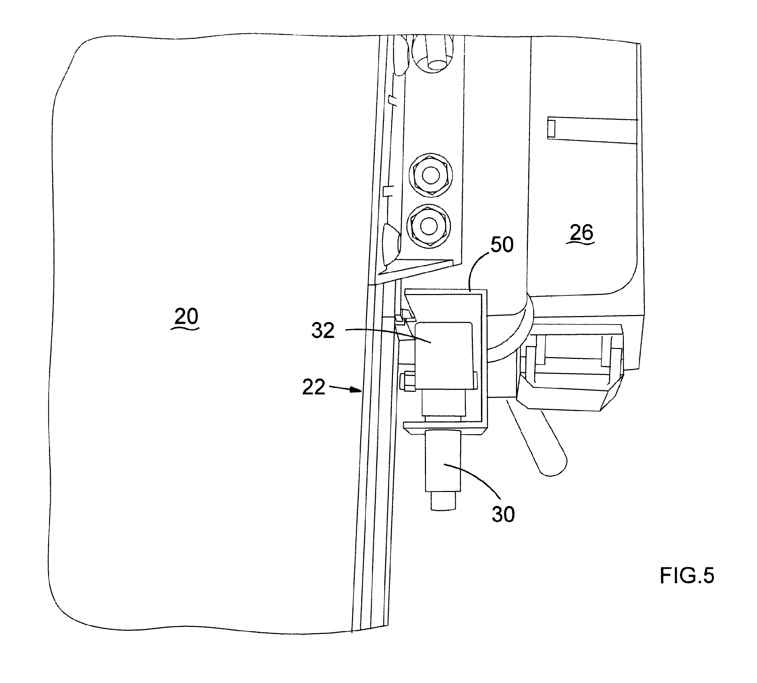

The second connection point comprises a sensor and will now be described with reference to Figures 5, 6, 10 and 11.

The connection point comprises two sections, a front section 30 and a rear section 32 rigidly attached to the front section. The front section 30 comprises a threaded passage 34 into which the bolt 18 can be screwed. The threaded passage 34 is circular in cross section and has a helical thread formed in the wall of the passage 34 at a fixed pitch, along the length of the passage in a permanent non moveable manner. Similarly, the threaded section of the bolt 18 is circular in cross section and has a helical thread formed around its outer surface at a fixed pitch, corresponding to that of the threaded passage 34, in a permanent no moveable manner. The rear section 32 forms a micro switch housing in which is mounted the micro switch 36. The micro switch 36 comprises a button 38 which can move between an outer position where it projects out of the micro switch and an inner position where it is located inside the micro switch 36. The button 38 is biased by a spring to its outer position. Depression of the button 38 sends a signal to the control electronics 102 of the planer thicknesser. The micro switch 36 is located in the rear section 32 so that the button 38 faces towards the end of the threaded passage 36. When the bolt 18 is screwed into the threaded passage 36 to its maximum extent, it engages with the button 38 and pushes it to its inner position. Thus, when the bolt 18 is secured to the connection point in order to attach the dust extractor, it activates the micro switch 36 which sends a signal to the control electronics 102. This allows the control electronics 102 to activate the motor on the planer thicknesser and operate it in a normal driving mode. Removal of the bolt 18 deactivates the micro switch 36 which stops sending a signal to the control electronics 102 which in turn either 1 ) prevents the operation of the motor 100, 2) provides sufficient voltage and/or current to the motor 100 to cause it to hum or buzz whilst being unable to rotate (thus providing an indication to the operator that the micro switch 36 has not been activated and therefore the dust extractor is not attached) or 3) drive motor 100 at a very slow rate and/or torque which would result in the cutting drum in rotating but being unable to cut anything (thus providing an indication to the operator that the micro switch 36 has not been activated and therefore the dust extractor is not attached).

The thread of the two bolts 18 and the threaded passages 34 of the first and second connection points is either of a non-standard and/or reversed pitch to prevent the user simply inserting a standard bolt to over ride the system. Alternatively or in addition to the use of a non standard or reversed pitch, the shape of the profile of the thread in the passage and on the bolt, in cross section, can be arranged so that the thread has a non standard shape which prevents the insertion of a bolt with a thread having a standard shaped profile into the passage.

The connection point is secured to a metal post 50 attached to the frame 26 with the rear section 32 located inside it.

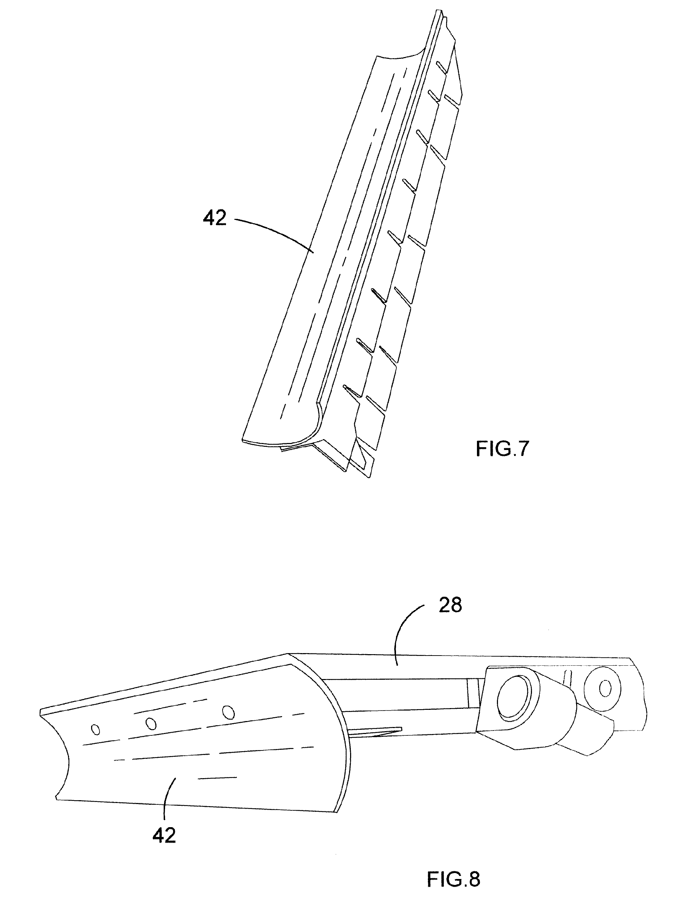

The design of the edges 40 (see Figure 9) of the front and rear tables 20, 28 has also been changed. The front edges 40 are presently flat. It is now intended to add a curved plastic guard 42 to each of them as shown in Figure 7 and 8. This will improved the performance of the wood chip removal.

A second embodiment of the present invention will now be described with reference to Figures 13 to 16. The second embodiment is described in relation to a band saw.

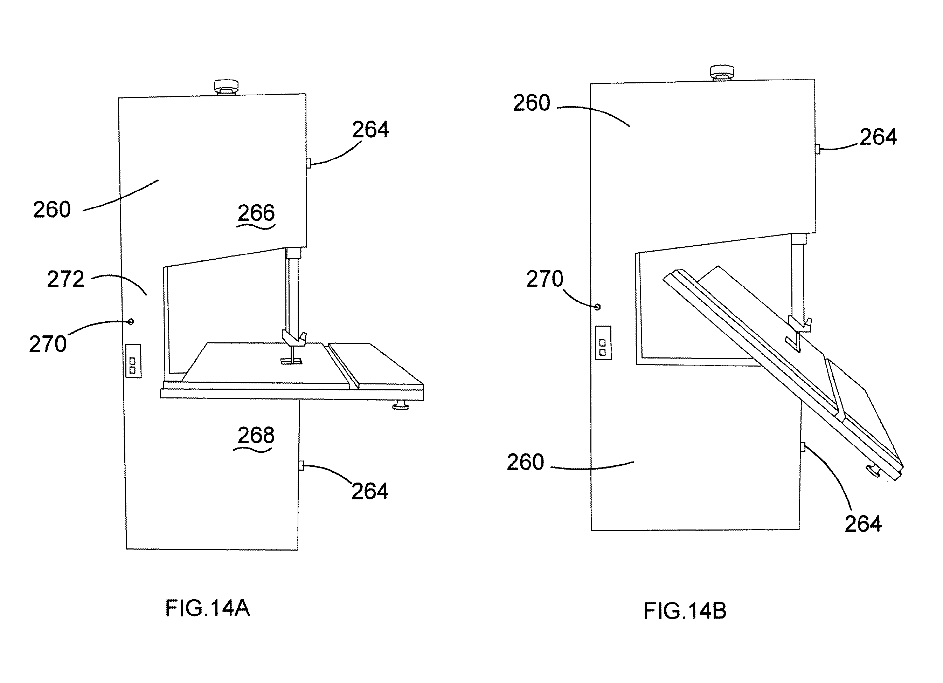

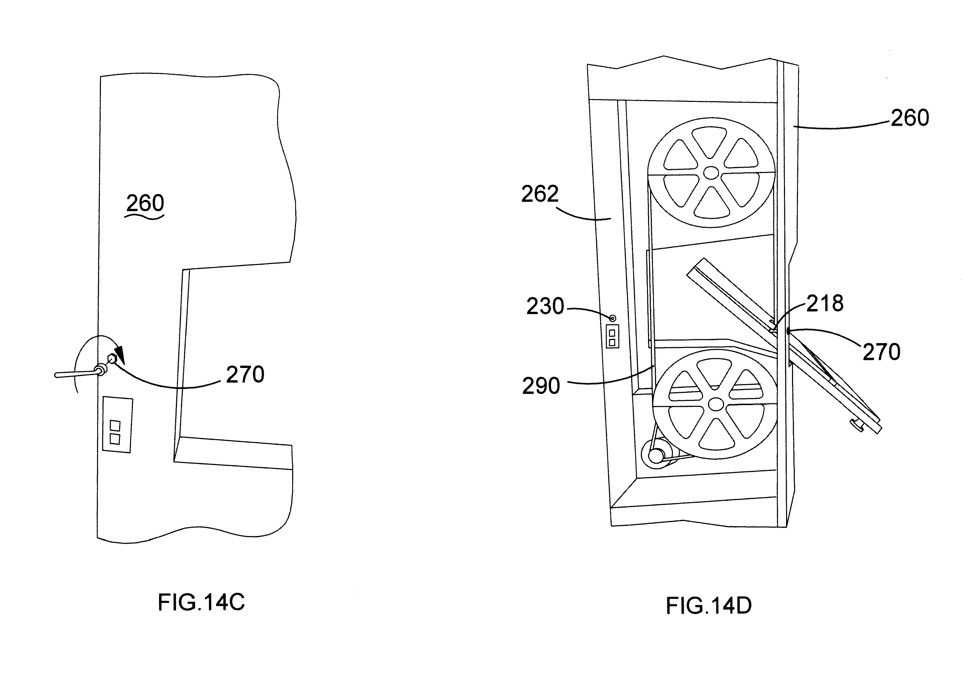

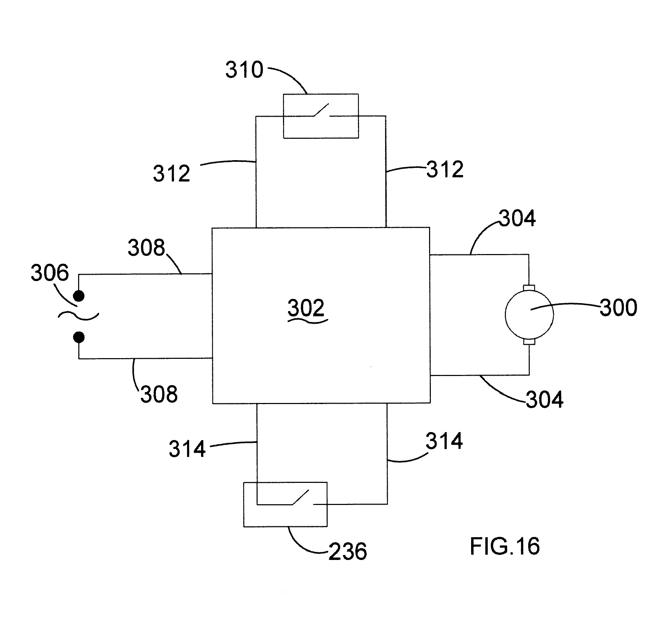

Referring to Figure 16, the band saw comprises control electronics 302 which is connected to a motor 300. The motor 300 rotatingly drives the band blade 290 (see Figure 14D). The control electronics 302 control the operation of the motor 300 which is powered by the control electronics via electric cables 304. The control electronics 302 controls the voltage and current signal to the motor to control its speed and torque out put. The control electronics 302 is connected to a mains power supply 306 via electric cables 308. An ON/OFF switch 110 is electrically connected to the control electronics 302 via electric cables 312. The ON/OFF switch 310 is mounted on the main housing of the band saw. Activation of the ON/OFF switch 310 by the operator sends a signal to the control electronics 302 to cause it to drive the motor 300. A micro switch 236 (described in more detail below) is electrically connected to the control electronics 302 via electric cables 314. The micro switch 236, when activated, sends a signal to the control electronics 302. The control electronic is configured so that it will only operate the motor 300 in a normal driving mode if the micro switch 236 is activated. If the micro switch 236 is not activated, the control electronics can be configured to either 1 ) prevent the operation of the motor 300, 2) provide sufficient voltage and/or current to the motor 300 to cause it to hum or buzz (providing an indication to the operator that the micro switch has not been activated) or 3) drive motor 300 at a very slow rate (providing an indication to the operator that the micro switch has not been activated).

Referring to Figures 14A to 14D, the new door 260 is the same shape as that shown in Figure 13. However, the door is attached to the housing 262 with two hinges 264 located at the end of the arm sections 266, 268. By placing the hinges in this position the door 260 is able to flex less. As such, only one lock 270 is required to lock the door to the main housing, which is located at the centre of the central section 272 of the door.

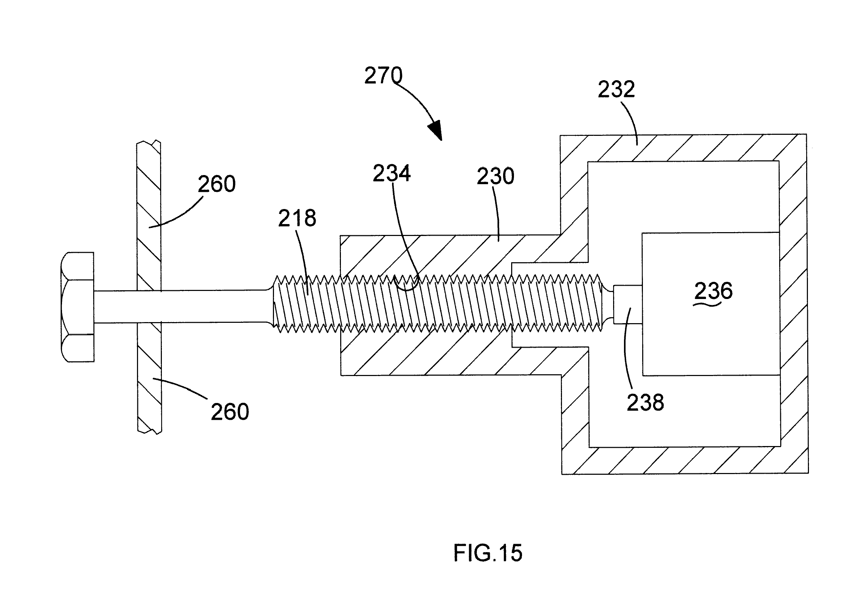

The lock will now be described with reference to Figure 15. The lock 70 comprises a connection point mounted in the housing 262 and a bolt 218 which is mounted in the door 260 and screws into the connection point. The bolt 218 can freely rotate in the door 260 to enable it to be screwed into the connection point but is prevented from being removed from the door 260.

The connection point comprises two sections, a front section 230 and a rear section 232 rigidly attached to the front section. The front section comprises a threaded passage 234 into which the bolt 218 can be screwed. The threaded passage 34 is circular in cross section and has a helical thread formed in the wall of the passage 34 at a fixed pitch, along the length of the passage in a permanent non moveable manner. Similarly, the threaded section of the bolt 18 is circular in cross section and has a helical thread formed around its outer surface at a fixed pitch, corresponding to that of the threaded passage 34, in a permanent no moveable manner. The rear section 32 forms a micro switch housing in which is mounted a micro switch 236. The micro switch 236 comprises a button 238 which can move between an outer position where it projects out of the micro switch and an inner position where it is located inside the micro switch 236. The button 238 is biased to its outer position. Depression of the button 238 sends a signal to the control electronics of the band saw. The micro switch 236 is located in the rear section so that the button 38 faces the threaded passage 236. When the bolt 18 is screwed into the threaded passage to its maximum extent, it engages with the button 238 and pushes it to its inner position. Thus, when the bolt is secured to the connection point in order to lock the door 260, it activates the micro switch 236 which sends a signal to the control electronics. This allows the control electronics to activate the motor 300 on the band saw. Removal of the bolt 218 deactivates the micro switch 36 which stops sending a signal to the control electronics 302 which in turn either 1 ) prevents the operation of the motor 100, 2) provides sufficient voltage and/or current to the motor 100 to cause it to hum or buzz whilst being unable to rotate (thus providing an indication to the operator that the micro switch 36 has not been activated and therefore the door is not locked to the housing) or 3) drive motor 100 at a very slow rate and/or torque which would result in the cutting drum in rotating but being unable to cut anything (thus providing an indication to the operator that the micro switch 36 has not been activated and therefore the door is not locked to the housing).

The thread of the two bolts 218 and the threaded passages 234 is either of a non-standard and/or reversed pitch to prevent the user simply inserting a standard bolt to over ride the system. Alternatively or in addition to the use of a non standard or reversed pitch, the shape of the profile of the thread in the passage and on the bolt, in cross section, can be arranged so that the thread has a non standard shape which prevents the insertion of a bolt with a thread having a standard shaped profile into the passage

Whilst two embodiments have been described with reference to a planer thicknesser and a band saw, the reader will appreciate that the invention is applicable to any power tool.

## Claims

1. A power tool comprising:
a body (26; 262);
a motor (100; 300) mounted within the body;
a cutting tool (24; 290) driven by the motor;
a cover (2; 260) releaseably lockable to the body;
a first connector mounted on the body and a second connector mounted on the cover, wherein one of the first or second connectors comprises a threaded rod (18; 218) and the other connector comprises a threaded passage (34; 234) and wherein the threaded rod is screwed into the threaded passage to lock the cover to the body;
control electronics (102; 302 which controls the motor (100; 300);
a micro switch (36; 236), electrically connected to the control electronics (102; 302), located adjacent the end of the passage (34; 234) and which is engaged by the end of the threaded rod (18; 218) when the threaded rod (18; 218) is screwed into the threaded passage (34; 231),
wherein the micro switch (36; 236) provides a signal to control electronics (102; 302) to indicate whether it is engaged with the end of the threaded rod (18; 218) or not, the control electronics (102; 302) allowing the motor (100; 300) to operate as normal when the micro switch (36; 236) indicates that the threaded rod (18; 218) is engaged with the micro switch (36; 236) and hindering the normal operation of the motor (100; 300) when the micro switch (36; 236) indicates that the threaded rod (18; 218) is not engaged with the micro switch (36; 236);
**characterised in that** both the threaded passage (34; 234) and rod (18; 218) have a permanent non moveable helical thread of a fixed pitch wherein the thread of the rod (18: 218) and passage (34; 234) is of a non standard pitch and/or the thread of the rod (18; 218) and the passage (34; 234) is in a reverse direction to that of a standard pitch.

2. A power tool as claimed in claim 1 wherein the control electronics (102) hinders the normal operation of the motor (100; 300) by preventing the operation of the motor (100; 300), or by providing sufficient voltage and/or current to the motor (100; 300) to cause it to hum or buzz whilst being unable to rotate, or by allowing the drive motor (100; 300) to rotate at a very slow rate and/or torque.

3. A power tool the threaded rod (18; 218) is rotatably mounted on the cover or body in a non removeable manner.

4. A power tool as claimed in any one of the previous claims wherein the thread of the rod (18; 218) and passage (34; 234) is of a non standard shape when viewed in profile.

5. A power as claimed in any of the previous claims wherein the power is a planer and thicknesser and the cover is a dust extractor.

6. A power tool as claimed in any of the previous claims wherein the power tool is a band saw and the cover is a door.
